# FASCICULE DE BREVET EUROPEEN

(11) **EP 4 085 190 B1**
(45) Date de publication et mention de la délivrance du brevet: **31.01.2024**
(21) Numéro de dépôt: 20851213.7
(22) Date de dépôt: 18.12.2020
(51) Int. Cl.: F02K 1/60

(54) **INVERSEUR DE POUSSÉE À PORTES COMPRENANT UN DÉFLECTEUR POUR REDIRIGER UN FLUX D'AIR VERS L'AMONT**
TÜRSCHUBUMKEHRVORRICHTUNG MIT EINER ABLENKVORRICHTUNG ZUM UMLENKEN EINES LUFTSTROMS IN AUFWÄRTSRICHTUNG
DOOR THRUST REVERSER COMPRISING A DEFLECTOR FOR REDIRECTING AN AIR FLOW IN THE UPSTREAM DIRECTION

(30) Priorité: 02.01.2020 FR 2000014
(43) Date de publication de la demande: 09.11.2022
(73) Titulaire: Safran Nacelles, 76700 Gonfreville-l'Orcher (FR)
(72) Inventeur: PASCAL, Sébastien Laurent Marie, 77550 MOISSY-CRAMAYEL (FR); VALLEROY, Laurent Georges, 77550 MOISSY-CRAMAYEL (FR); FERREY, Paul, 77550 MOISSY-CRAMAYEL (FR)
(74) Mandataire: Brevalex
(86) Numéro de dépôt international: PCT/FR2020/052555
(87) Numéro de publication internationale: WO 2021/136903

(56) Documents cités:
- FR-A1- 2 706 947
- US-A- 3 893 626
- US-A1- 2009 126 342

## Description

### Domaine technique

L'invention se rapporte au domaine des inverseurs de poussée pour nacelle d'ensemble propulsif d'aéronef, et plus spécifiquement au domaine des inverseurs à portes.

De manière non limitative, l'invention présente un intérêt particulier lorsqu'un tel inverseur équipe un ensemble propulsif monté au voisinage d'un empennage, c'est-à-dire généralement en partie arrière du fuselage d'un aéronef.

### État de la technique antérieure

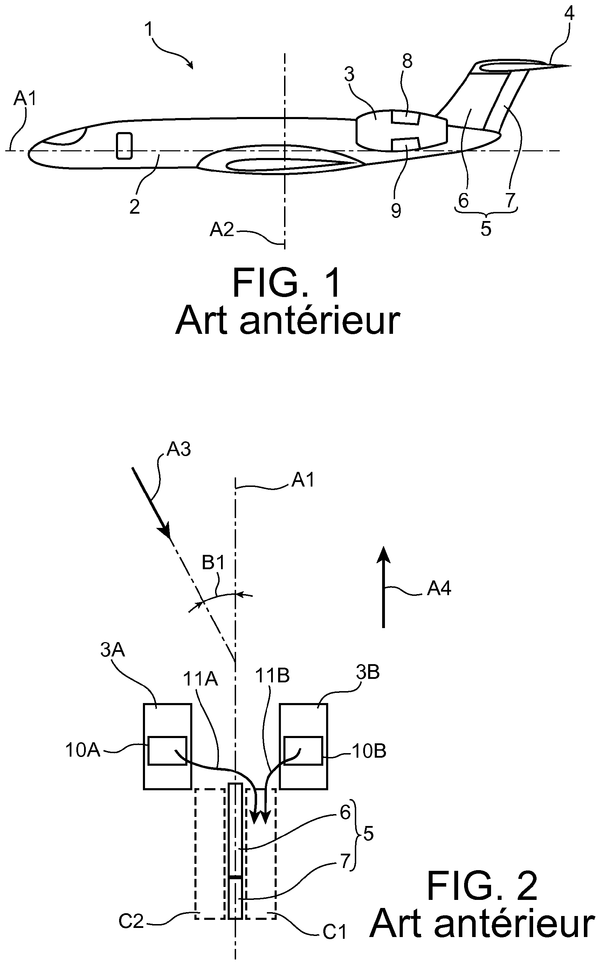

Il est représenté à la figure 1 un avion 1 d'affaires conventionnel s'étendant le long d'un axe longitudinal A1. Cet avion 1 comprend un fuselage 2, deux ensembles propulsifs 3 montés en partie arrière du fuselage 2 (un seul ensemble propulsif étant visible à la figure 1), un empennage horizontal 4 et un empennage vertical 5. L'empennage vertical 5 comprend une partie fixe 6, aussi appelée dérive, et une partie mobile 7, aussi appelée gouverne de direction ou de symétrie. La dérive 6 est destinée à stabiliser l'avion 1 autour d'un axe de lacet A2, notamment afin de maintenir l'axe longitudinal A1 parallèle à l'axe de la piste en phase d'atterrissage en cas de vent de travers (voir ci-après). La gouverne de symétrie 7 est destinée à contrôler le moment de l'avion 1 autour de l'axe de lacet A2, notamment pour pouvoir maintenir l'axe longitudinal A1 parallèle à l'axe de la piste en phase d'atterrissage.

Chacun des ensembles propulsifs 3 comprend un inverseur de poussée ayant une porte supérieure 8 et une porte inférieure 9. A la figure 1, les ensembles propulsifs 3 sont dans une configuration de poussée directe dans laquelle les portes 8 et 9 sont fermées de manière à obturer des ouvertures d'inversion respectives (non représentées sur cette figure).

La figure 2 représente schématiquement les deux ensembles propulsifs (respectivement référencés 3A et 3B) ainsi que l'empennage vertical 5 par rapport audit axe longitudinal A1 et à un vent relatif A3. Le vent relatif A3 est le vent généré par la somme du déplacement de l'avion 1 et du vent. A la figure 2, les ensembles propulsifs 3A et 3B sont dans une configuration d'inversion de poussée dans laquelle lesdites portes (non représentées sur cette figure) sont ouvertes de manière à libérer les ouvertures d'inversion correspondantes, à savoir une ouverture d'inversion supérieure 10A associée à la porte supérieure de l'inverseur de l'ensemble propulsif 3A et une ouverture d'inversion supérieure 10B associée à la porte supérieure de l'inverseur de l'ensemble propulsif 3B.

De manière connue en soi, les portes des ensembles propulsifs 3A et 3B en configuration d'inversion de poussée sont configurées pour rediriger dans un sens amont A4 une partie de l'air sortant des ensembles propulsifs 3A et 3B par les ouvertures d'inversion 10A/10B.

La figure 2 illustre une situation d'atterrissage par vent de travers, entraînant un déplacement de l'avion 1 autour de l'axe de lacet A2 de sorte que son axe longitudinal A1 forme un angle B1 avec la direction du vent relatif A3.

Dans ces conditions, l'empennage vertical 5 est susceptible d'être soumis à des courants d'air asymétriques, compte tenu notamment des trajectoires respectives des écoulements d'air sortant des ensembles propulsifs 3A et 3B par les ouvertures d'inversion supérieures 10A et 10B.

En effet, une partie de l'air sortant de l'ensemble propulsif 3B, par l'ouverture d'inversion supérieure 10B, s'écoule typiquement selon une trajectoire 11B passant par une région C1 s'étendant le long de l'une des faces de l'empennage vertical 5 située du côté de cet ensemble propulsif 3B. Une partie de l'air sortant de l'ensemble propulsif 3A, par l'ouverture d'inversion supérieure 10A, s'écoule typiquement selon une trajectoire 11A contournant la dérive 6 et traversant également la région C1. Du côté de l'ensemble propulsif 3A, une région C2 s'étendant le long de l'autre face de l'empennage vertical 5 se retrouve ainsi sous-alimentée en air.

La sous-alimentation en air de la dérive 6 au niveau de la région C2 entraîne une perte de stabilité de l'avion 1.

De plus, la gouverne 7 ainsi déventée au niveau de la région C2 présente une efficacité réduite susceptible d'entraîner une perte de contrôlabilité de l'avion 1 et potentiellement une sortie de piste.

En outre, les documents US2009/126342 A1 et US3893626 A révèlent des systèmes d'inversion de poussée connus dans l'état de la technique.

### Exposé de l'invention

Un but de l'invention est de fournir un inverseur à portes capable d'améliorer la stabilité et la contrôlabilité d'un aéronef lorsque les portes sont ouvertes en phase d'atterrissage, en particulier par vent de travers.

Plus généralement, l'invention vise à procurer un inverseur à portes permettant de mieux maîtriser les écoulements d'air résultant de l'ouverture des portes.

A cet effet, l'invention a pour objet un inverseur de poussée pour ensemble propulsif d'aéronef, cet inverseur comprenant une structure fixe et au moins une porte mobile entre :
- une position fermée dans laquelle elle délimite avec la structure fixe un conduit d'écoulement, le conduit d'écoulement comprenant une sortie d'éjection délimitée au moins en partie par une extrémité arrière de la structure fixe, la porte en position fermée étant configurée pour pouvoir guider un fluide en écoulement dans le conduit vers sa sortie d'éjection afin de générer une poussée, et
- une position ouverte dans laquelle la porte dégage une ouverture d'inversion de manière à pouvoir évacuer du conduit d'écoulement une partie dudit fluide, via cette ouverture d'inversion, et rediriger une première partie du fluide ainsi évacué vers une extrémité avant de la structure fixe afin de générer une contre-poussée, l'ouverture de la porte formant au moins une ouverture latérale s'étendant entre la structure fixe et une extrémité latérale de la porte.

Selon l'invention, uniquement d'un côté d'un premier plan longitudinal médian de l'inverseur, l'une parmi la porte et la structure fixe, ou chacune parmi la porte et la structure fixe comprend au moins un déflecteur configuré pour pouvoir rediriger vers l'avant de la structure fixe une deuxième partie du fluide, cette deuxième partie du fluide sortant du conduit d'écoulement selon une trajectoire orientée vers ladite ouverture latérale.

Autrement dit, chaque déflecteur qui est relié à la porte ou la structure fixe et qui est configuré pour pouvoir rediriger vers l'avant de la structure fixe ladite deuxième partie du fluide, est situé d'un même côté du premier plan longitudinal médian de l'inverseur.

Ainsi, lorsque la porte et/ou la structure fixe comprennent plusieurs déflecteurs, ceux-ci sont tous situés du même côté du premier plan longitudinal médian.

Plus généralement, l'inverseur est par conséquent dépourvu d'un tel déflecteur de l'autre côté du premier plan longitudinal médian.

Un tel déflecteur permet d'éviter que la partie de fluide ainsi redirigée ne suralimente un côté de l'empennage vertical et en particulier de la gouverne.

L'invention permet ainsi d'améliorer la stabilité et la contrôlabilité de l'aéronef.

Le déflecteur selon l'invention permet plus généralement de mieux maîtriser les écoulements d'air résultant de l'ouverture de ladite porte.

Dans un mode de réalisation, le déflecteur peut comprendre un ou plusieurs canaux de redirection de ladite deuxième partie de fluide.

Selon une première variante de réalisation, la ou les structures, parmi la porte et la structure fixe, comprenant ledit déflecteur peut comprendre un ou plusieurs évidements formant le ou lesdits canaux.

Selon une deuxième variante de réalisation, le déflecteur peut être une pièce rapportée.

L'inverseur peut comprendre à la fois un ou plusieurs déflecteurs selon la première variante et un ou plusieurs déflecteurs selon la deuxième variante.

Dans un mode de réalisation, le déflecteur peut s'étendre radialement entre une surface interne et une surface externe de la porte, au moins lorsque la porte est fermée.

Une telle configuration du déflecteur permet de limiter son impact sur les écoulements de fluide dans le conduit et à l'extérieur de l'inverseur en configuration de poussée directe. Cela permet d'éviter un accroissement de traînée.

De préférence, lorsque le déflecteur comprend le ou lesdits canaux de redirection, le déflecteur peut être configuré de sorte qu'une entrée du ou desdits canaux soit obturée par la porte et/ou par la structure fixe lorsque la porte est fermée.

Dans un mode de réalisation, le déflecteur peut être configuré pour rediriger ladite deuxième partie du fluide de sorte que, en sortie du déflecteur, au moins une fraction du fluide ainsi redirigé soit orientée dans une direction formant avec un axe central longitudinal de l'inverseur, dans un plan médian horizontal passant par cet axe central longitudinal, un angle compris entre 15° et 75°, de préférence compris entre 35° et 55°, de préférence égal à 45°, lorsque la porte est en position ouverte.

L'invention a aussi pour objet une nacelle pour ensemble propulsif d'aéronef, cette nacelle comprenant un inverseur tel que décrit ci-dessus.

L'invention a aussi pour objet un ensemble propulsif pour aéronef, cet ensemble propulsif comprenant une telle nacelle.

Enfin, l'invention a aussi pour objet un aéronef comprenant un tel ensemble propulsif.

Dans un mode de réalisation, l'ensemble propulsif peut être monté sur un fuselage de l'aéronef le déflecteur et le fuselage étant situés du même côté dudit premier plan longitudinal médian de l'inverseur.

De préférence, un empennage de l'aéronef et ladite porte de l'inverseur peuvent être situés d'un même côté d'un deuxième plan longitudinal médian de l'inverseur, ce deuxième plan longitudinal médian étant perpendiculaire audit premier plan longitudinal médian.

D'autres avantages et caractéristiques de l'invention apparaîtront à la lecture de la description détaillée, non limitative, qui suit.

### Brève description des dessins

La description détaillée qui suit fait référence aux dessins annexés sur lesquels :
[Fig. 1] est une vue schématique, déjà décrite ci-dessus, d'un aéronef de l'art antérieur, cet aéronef comprenant des ensembles propulsifs équipés chacun d'un inverseur de poussée à portes ;
[Fig. 2] est une vue schématique, déjà décrite ci-dessus, de parties de l'aéronef de la figure 1 en phase d'atterrissage par vent de travers, les inverseurs étant dans une configuration d'inversion de poussée ;
[Fig. 3] est une vue schématique en coupe axiale d'un ensemble propulsif d'aéronef ;
[Fig. 4] est une vue schématique en perspective d'un inverseur de poussée de l'art antérieur, cet inverseur comprenant des portes en position ouverte correspondant à une configuration d'inversion de poussée ;
[Fig. 5] est une vue schématique en coupe axiale de l'inverseur de la figure 4, en configuration d'inversion de poussée ;
[Fig. 6] est une vue schématique en coupe axiale de l'inverseur de la figure 4, en configuration de poussée directe, les portes étant en position fermée ;
[Fig. 7] est une vue schématique en perspective d'une porte d'inverseur comprenant un déflecteur selon un premier mode de réalisation de l'invention ;
[Fig. 8] est une vue schématique en coupe de la porte de la figure 7 ;
[Fig. 9] est une vue schématique en coupe d'un inverseur équipée de la porte de la figure 7, l'inverseur étant en configuration de poussée directe ;
[Fig. 10] est une vue schématique en coupe d'un inverseur ayant une porte pourvue d'un déflecteur selon un deuxième mode de réalisation de l'invention, l'inverseur étant en configuration de poussée directe ;
[Fig. 11] est une vue schématique d'un inverseur conforme à l'invention en configuration d'inversion de poussée et d'un empennage d'un aéronef équipé de cet inverseur ;
[Fig. 12] est une vue schématique en perspective d'un inverseur de poussée conforme à l'invention en configuration d'inversion de poussée, cet inverseur comprenant un déflecteur solidaire de la structure fixe de l'inverseur.

### Description détaillée de modes de réalisation

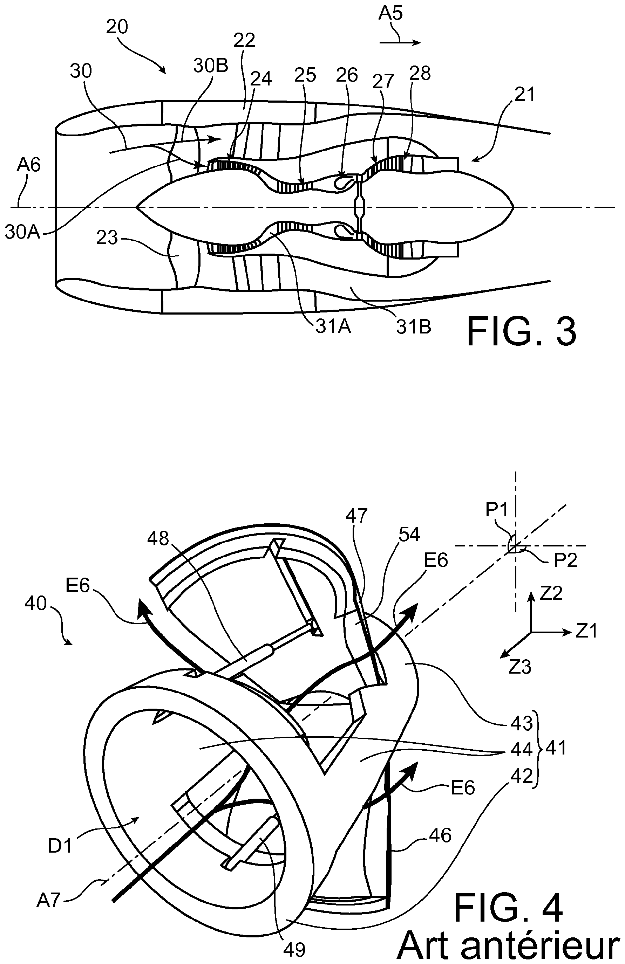

Il est représenté à la figure 3 un ensemble propulsif 20 destiné à être monté sur un aéronef tel l'avion 1 de la figure 1.

Dans la présente description, les termes « amont », « aval », « avant » et « arrière » sont définis par rapport à un sens A5 d'écoulement d'air autour de l'ensemble propulsif 20 lorsque celui-ci génère une poussée, c'est-à-dire un sens A5 opposé au sens du déplacement de l'aéronef qu'il propulse.

De manière connue en soi, l'ensemble propulsif 20 comprend une turbomachine 21 carénée par une nacelle 22. Dans cet exemple, la turbomachine 21 est un turboréacteur à double corps et à double flux.

Le turboréacteur 21 présente un axe central longitudinal A6 autour duquel s'étendent ses différents composants, en l'occurrence, de l'avant vers l'arrière du turboréacteur 21, une soufflante 23, un compresseur basse pression 24, un compresseur haute pression 25, une chambre de combustion 26, une turbine haute pression 27 et une turbine basse pression 28. Les compresseurs 24 et 25, la chambre de combustion 26 et les turbines 27 et 28 forment un générateur de gaz.

Lors du fonctionnement du turboréacteur 21, un écoulement d'air 30 pénètre dans la nacelle 22 par une entrée d'air en amont de l'ensemble propulsif 20, traverse la soufflante 23 puis se divise en un flux primaire 30A central et un flux secondaire 30B. Le flux primaire 30A s'écoule dans une veine primaire 31A de circulation des gaz traversant le générateur de gaz. Le flux secondaire 30B s'écoule dans une veine secondaire 31B entourant le générateur de gaz et délimitée radialement vers l'extérieur par la nacelle 22.

L'invention se rapporte plus spécifiquement à un inverseur de poussée 40 du type illustré à la figure 4. Sur cette figure, l'inverseur 40 est un inverseur de l'art antérieur au sens où il ne comprend aucun déflecteur de redirection de flux latéral (voir plus loin ci-dessous). La figure 4 a vocation à illustrer plus précisément la structure de cet inverseur 40 et certaines trajectoires typiques du fluide sortant de cet inverseur 40 lorsque celui-ci est dans une configuration d'inversion de poussée.

De manière générale, l'inverseur 40 a pour fonction d'inverser une partie de la poussée générée par l'ensemble propulsif 20 afin de freiner l'aéronef lors de son atterrissage.

Bien entendu, l'inverseur 40 peut équiper un ensemble propulsif différent de celui de la figure 3 sans sortie du cadre de l'invention.

En référence à la figure 4, l'inverseur 40 comprend d'une part une structure fixe 41 s'étendant le long d'un axe central longitudinal A7.

La structure fixe 41 comprend dans cet exemple un cadre avant 42, une section arrière 43 et deux poutres 44 reliant le cadre avant 42 et la section arrière 43 l'un à l'autre.

Le cadre avant 42 a une forme annulaire configurée pour relier l'inverseur 40 à la nacelle 22, selon toute technique d'assemblage conventionnelle.

Dans cet exemple, la section arrière 43 a une forme annulaire définissant une virole d'éjection. Cette virole d'éjection 43 définit une extrémité arrière à la fois de l'inverseur 40, de la nacelle 22 et de l'ensemble propulsif 20.

Lorsque l'inverseur 40 est monté sur l'ensemble propulsif 20, l'axe central longitudinal A7 de l'inverseur 40 et l'axe central longitudinal A6 de l'ensemble propulsif 20 coïncident.

Le cadre avant 42, la section arrière 43 et les poutres 44 délimitent, radialement vers l'extérieur, un conduit d'écoulement D1 pour un fluide provenant d'une partie de l'ensemble propulsif 20 située en amont de l'inverseur 40.

Plus précisément, le fluide susceptible de s'écouler dans le conduit D1 est dans cet exemple constitué d'un mélange de gaz sortant de la veine primaire 31A et d'air en provenance de la veine secondaire 31B, c'est-à-dire d'un mélange des flux primaire 30A et secondaire 30B.

Le conduit d'écoulement D1 comprend une entrée délimitée par le cadre avant 42 et une sortie d'éjection délimitée par la section arrière 43.

Afin de pouvoir réaliser l'inversion de poussée, la structure fixe 41 comprend dans cet exemple deux ouvertures d'inversion sous forme d'ouvertures radiales.

Chacune de ces ouvertures d'inversion est délimitée, longitudinalement, par le cadre avant 42 et la section arrière 43 et, radialement, par les poutres 44.

L'inverseur 40 de la figure 4 comprend d'autre part une structure mobile sous forme de deux portes 46 et 47 pivotantes.

Les portes 46 et 47 sont respectivement dénommées porte inférieure et porte supérieure, en référence à leur positionnement relatif par rapport à la verticale lorsque l'inverseur 40 est relié à un aéronef en configuration de vol.

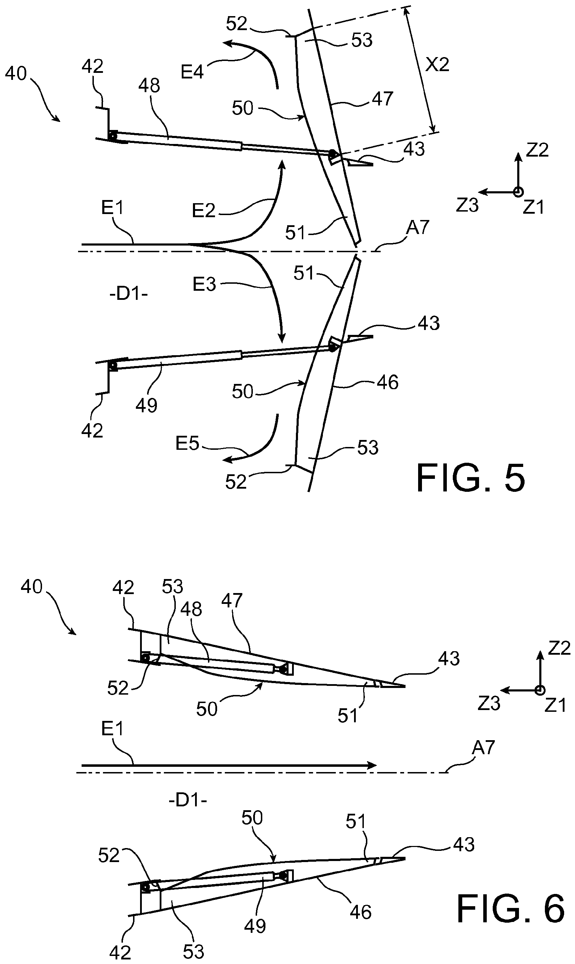

Chacune des portes 46 et 47 est mobile par rapport à la structure fixe 41, autour d'un axe de rotation respectif (non représenté), entre une position ouverte, illustrée aux figures 4 et 5, et une position fermée illustrée à la figure 6.

Pour modifier la position des portes 46 et 47, l'inverseur 40 comprend deux vérins 48 et 49 qui sont chacun reliés d'une part au cadre avant 42 de la structure fixe 41 et d'autre part à l'une respective des portes 46 et 47.

En référence à la figure 6, dans laquelle les portes 46 et 47 sont en position fermée, chacune des portes 46 et 47 obture l'une respective des ouvertures d'inversion de manière à délimiter, en continuité avec la structure fixe 41, le conduit d'écoulement D1.

En position fermée, les portes 46 et 47 permettent de guider vers la sortie d'éjection un fluide E1 pénétrant dans le conduit D1 au niveau du cadre avant 42 et s'écoulant dans le conduit D1 dans une direction globalement parallèle à l'axe central longitudinal A7. Comme indiqué ci-dessus, le flux de fluide E1 comprend dans cet exemple un mélange des flux primaire 30A et secondaire 30B générés par le fonctionnement du turboréacteur 21.

Dans cette configuration de l'inverseur 40 dans laquelle les portes 46 et 47 sont en position fermée, l'ensemble propulsif 20 peut générer une poussée directe. Cette configuration de l'inverseur 40 est dite de poussée directe, ou encore « jet direct ».

En référence à la figure 5, dans laquelle les portes 46 et 47 sont en position ouverte, les portes 46 et 47 dégagent les ouvertures d'inversion de la structure fixe 41.

Cette position ouverte permet d'évacuer du conduit d'écoulement D1, via les ouvertures d'inversion, des parties E2 et E3 du fluide E1 s'écoulant dans le conduit D1. Elle permet en outre de rediriger au moins une partie E4 et E5 du fluide ainsi évacué vers l'amont, c'est-à-dire en particulier vers le cadre avant 42 de la structure fixe 41 et plus généralement vers l'avant de l'ensemble propulsif 20 et de l'aéronef 1. Le fluide ainsi redirigé vers l'amont génère une contre-poussée.

Pour orienter le fluide vers l'amont, les portes 46 et 47 comprennent chacune une paroi interne 50 ayant une extrémité proximale 51 configurée pour s'étendre radialement au travers du conduit d'écoulement D1, de manière à empêcher tout ou l'essentiel du fluide E1 en écoulement dans le conduit D1 de poursuivre sa trajectoire jusqu'à la sortie d'éjection. L'orientation de la paroi interne 50 est telle que le fluide E1 ainsi bloqué poursuive sa trajectoire en traversant les ouvertures d'inversion et en ayant au moins une composante orientée vers l'amont.

De manière connue en soi, il est possible de maximiser cette composante et d'améliorer les performances en inversion de poussée en plaçant un becquet 52 à une extrémité distale 53 de la paroi interne 50 de chacune des portes 46 et 47.

Lorsque les portes 46 et 47 sont en position ouverte, l'inverseur 40 est dans une configuration dite d'inversion de poussée, aussi appelée « jet inversé ».

Dans la présente description, l'expression « position ouverte » désigne une position d'ouverture maximale telle que représentée aux figures 4 et 5, étant entendu que les portes 46 et 47 occupent transitoirement des positions intermédiaires lors des changements de configuration de l'inverseur 40.

En pratique, l'inverseur 40 de la figure 4 ne permet pas de rediriger vers l'amont l'intégralité du fluide E1 lorsque les portes 46 et 47 sont ouvertes.

Notamment, une fraction E6 du fluide sortant du conduit d'écoulement D1 par les ouvertures d'inversion tend à poursuivre sa trajectoire latéralement, vers l'aval, en traversant des ouvertures latérales respectivement définies entre des extrémités latérales 54 des portes 46 et 47 et les poutres 44 de la structure fixe 41 lorsque les portes 46 et 47 sont ouvertes (voir figure 4).

Cette fraction de fluide E6 est susceptible de réduire la stabilité et la contrôlabilité de l'aéronef pour les raisons exposées ci-dessus en référence à la figure 2.

Pour remédier à cet inconvénient, l'inverseur 40 comprend au moins un déflecteur 60 tel que décrit ci-après, afin de contrôler l'orientation d'une partie de cette fraction de fluide E6.

La figure 4 comprend un référentiel Z1, Z2 et Z3 définissant respectivement des directions latérale, verticale et longitudinale.

Il est défini par rapport à ce référentiel un premier plan longitudinal médian P1 et un deuxième plan longitudinal médian P2. Dans cet exemple, le plan longitudinal médian P1 est un plan vertical parallèle aux directions Z2 et Z3 et passant par l'axe central longitudinal A7 de l'inverseur 40 et par les vérins 48 et 49. Le plan longitudinal médian P2 est un plan horizontal parallèle aux directions Z1 et Z3 qui passe aussi par l'axe central longitudinal A7 et qui est perpendiculaire au plan vertical P1.

Dans chacun des exemples qui suivent, il est considéré que l'inverseur 40 équipe un ensemble propulsif 20 relié à l'aéronef 1 de sorte que le déflecteur 60 de l'inverseur 40 et le fuselage 2 de l'aéronef 1 soient situés du même côté du plan vertical P1 et que le déflecteur 60 de l'inverseur 40 et l'empennage 5 de l'aéronef 1 soient situés du même côté du plan horizontal P2.

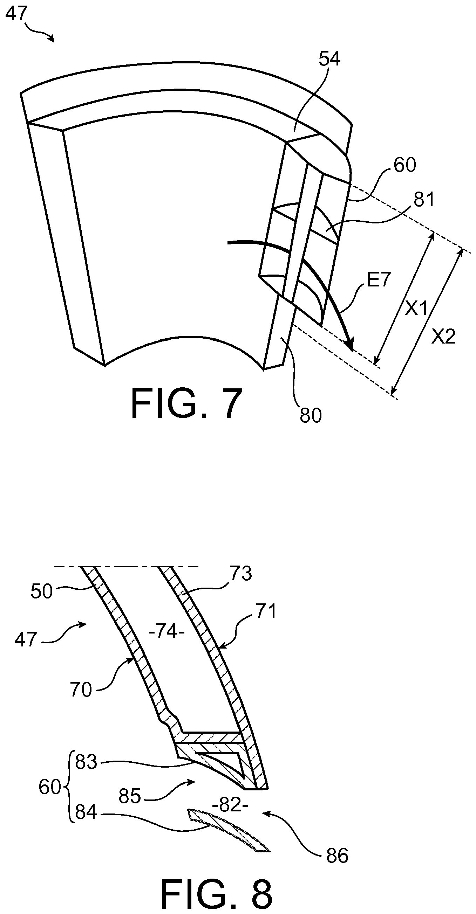

Dans le mode de réalisation des figures 7 et suivantes, l'inverseur 40 a une structure générale semblable à celle de l'inverseur de la figure 4.

Il est représenté isolément à la figure 7 la porte supérieure 47 de cet inverseur 40 ainsi qu'un déflecteur 60 agencé sur un flanc 80 de la porte 47 situé à l'une de ses extrémités latérales 54. Cette extrémité latérale 54 est dite interne en référence à sa position relative au sein d'une architecture préférée de l'invention.

Dans cette architecture préférée, l'inverseur 40 équipe un ensemble propulsif tel l'ensemble propulsif 20 de la figure 3 lui-même monté sur le fuselage 2 d'un aéronef, tel l'avion 1 de la figure 1, de sorte que ladite extrémité latérale interne 54 soit située du même côté que le fuselage 2 par rapport audit plan vertical P1.

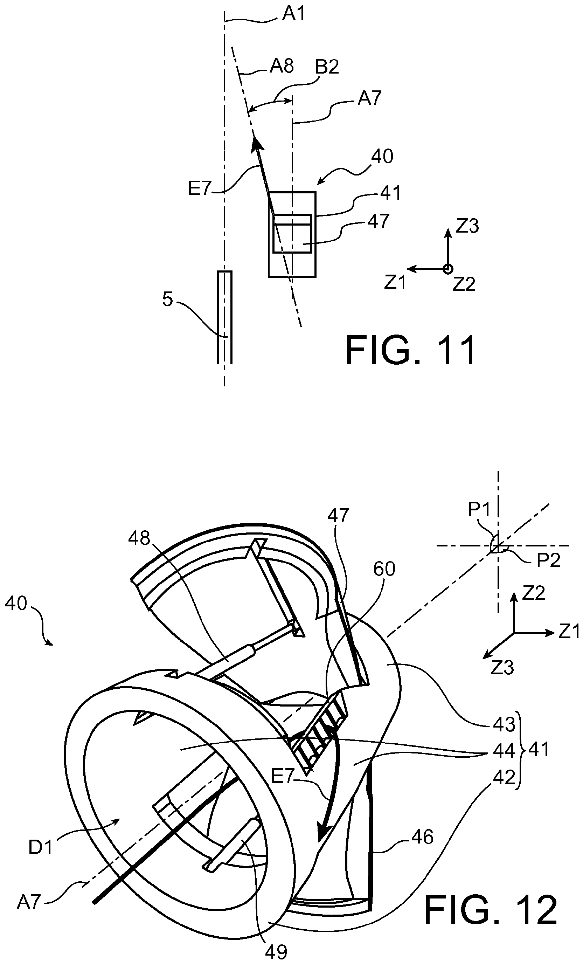

Dans un tel contexte, le déflecteur 60 est configuré pour rediriger vers l'amont, c'est-à-dire à l'opposé de l'empennage 5 de cet aéronef 1, une partie E7 du fluide sortant du conduit D1 lorsque la porte supérieure 47 est en position ouverte (voir figures 7 et 11).

Le fluide E7 ainsi redirigé vers l'amont est dévié de sa trajectoire naturelle E6 illustrée à la figure 4, ce qui permet de réduire le phénomène d'alimentation asymétrique en air de l'empennage 5 et en particulier de la gouverne 7, notamment par vent de travers.

Dans l'exemple des figures 7 à 9, le déflecteur 60 comprend un unique canal de redirection 82 en travers duquel s'étend un raidisseur 81 destiné à renforcer sa structure. Optionnellement, ce raidisseur 81 peut être orienté de manière à contribuer à l'orientation du flux E7 traversant ce canal de redirection.

Autrement dit, le canal de redirection 82 est dans cet exemple divisé en deux compartiments.

En référence à la figure 8, le canal de redirection 82 est délimité par deux parois 83 et 84 du déflecteur 60 et présente une entrée 85 et une sortie 86.

Les parois 83 et 84 sont incurvées de manière à orienter le flux E7 vers l'amont lorsque la porte 47 est en position ouverte.

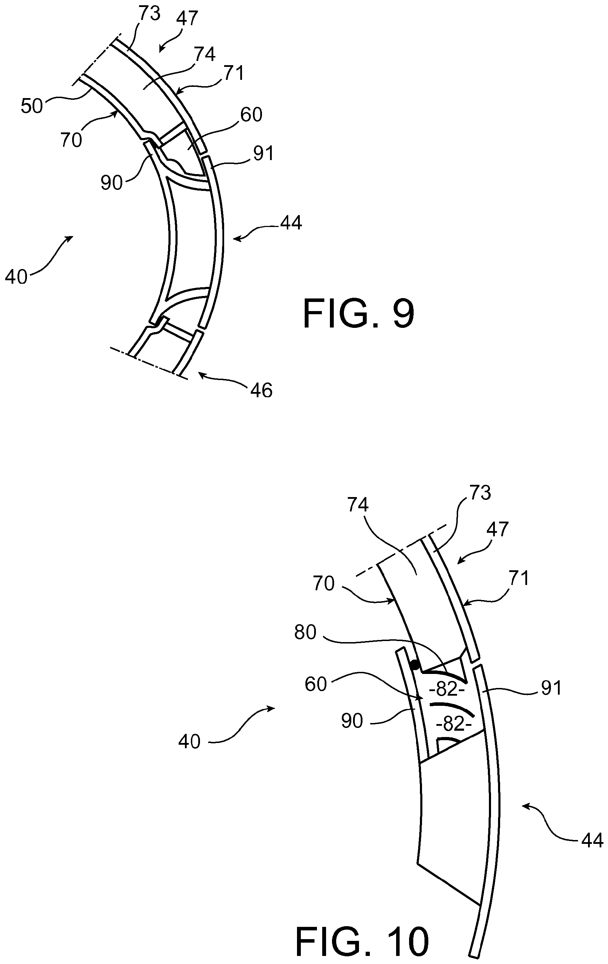

Dans le mode de réalisation de la figure 10, le déflecteur 60 comprend deux canaux de redirection 82.

Dans un mode de réalisation non représenté, chacun des canaux de redirection comprend un ou plusieurs éléments de renforts tels que le raidisseur 81 représenté à la figure 7.

Dans chacun de ces modes de réalisation, le déflecteur 60 s'étend radialement entre une surface interne 70 et une surface externe 71 de la porte 47 (voir figures 8 à 10).

En référence aux figures 9 et 10, lorsque la porte 47 est en position fermée, le déflecteur 60 est reçu dans un logement délimité circonférentiellement entre l'une des poutres 44 et un noyau 74 de la porte 47. Cette poutre 44 est dite interne compte tenu de son positionnement en vis-à-vis de l'extrémité latérale interne 54 et par suite de sa position relative par rapport au plan longitudinal médian vertical et au fuselage 2.

Radialement, ce logement est délimité :
- dans l'exemple de la figure 10, par des parois interne 90 et externe 91 de la poutre interne 44 ;
- dans l'exemple de la figure 9, d'une part par la paroi interne 90 de la poutre interne 44 et, d'autre part, en partie par la paroi externe 91 de la poutre interne 44 et en partie par une paroi externe 73 de la porte 47.

Dans chacun de ces exemples, lorsque la porte 47 est en position fermée, le ou les canaux de redirection 82 sont obturés en entrée par la paroi interne 90 de la poutre interne 44 et en sortie par la paroi externe 91 de la poutre interne 44.

Le déflecteur 60 des figures 7 à 10 est une pièce distincte de la porte 47 et est fixé sur celle-ci, par exemple par soudage ou rivetage.

Dans un mode de réalisation non représenté, le ou les canaux de redirections 82 sont des évidements réalisés dans la porte 47.

Dans l'exemple de la figure 7, le déflecteur 60 est positionné à une extrémité distale du flanc 80 de la porte 47 et, de manière indépendante, présente une dimension longitudinale X1 supérieure à la moitié de la longueur X2 de la partie émergée du flanc 80 de la porte 47 (voir aussi figure 5).

De bonnes performances peuvent être obtenues avec une dimension X1 supérieure ou égale à 25% de la dimension X2.

Concernant l'orientation du flux E7, le déflecteur 60 est de préférence configuré pour rediriger au moins une partie du fluide E7 traversant le ou les canaux de redirection 82 suivant une direction A8 (voir figure 11).

Dans cet exemple, la direction A8 et l'axe central longitudinal A7 de l'inverseur 40 forment, dans un plan médian horizontal passant par cet axe A7, un angle B2 tel que la composante axiale du flux E7 soit supérieure à sa composante latérale.

Dans cet exemple, l'angle B2 est compris entre 15° et 25°.

Dans les modes de réalisation décrits ci-dessus, l'inverseur 40 comprend un unique déflecteur 60 solidaire de la porte supérieure 47 et situé du même côté que le fuselage 2 de l'aéronef 1 par rapport audit plan longitudinal médian vertical P1 de cet inverseur 40.

Dans un autre mode de réalisation non représenté, la porte inférieure 46 de l'inverseur 40 comprend un deuxième déflecteur du même type, du même côté que le déflecteur 60 de la porte supérieure 47 par rapport à ce plan vertical.

La figure 12 montre un autre exemple de réalisation dans lequel le déflecteur 60 est solidaire de la structure fixe 44. Ce qui vient d'être décrit en référence aux figures 7 à 11 s'applique par analogie au mode de réalisation de la figure 12.

Dans l'exemple de la figure 12, le déflecteur 60 comprend une grille ayant des aubes incurvées qui délimitent plusieurs canaux de redirection de fluide se succédant longitudinalement.

La grille 60 est dans cet exemple une pièce distincte de la poutre interne 44 et est fixée sur celle-ci, par exemple par soudage ou rivetage.

Plus précisément, la grille 60 s'étend selon une direction longitudinale et comprend le long de cette direction une succession d'aubes. Pour chaque paire d'aubes adjacentes, celles-ci délimitent entre elles l'un des canaux de redirection, chaque canal de redirection comprenant une entrée située radialement à l'intérieur relativement à la poutre interne et une sortie située radialement à l'extérieur relativement à cette poutre interne.

Dans un mode de réalisation, les aubes de la grille 60 sont mobiles et leur orientation est commandée par un actionneur (non représenté) configuré pour modifier une direction de sortie du fluide traversant les canaux de redirection en fonction de conditions externes (vent latéral, vitesse, etc.).

Bien entendu, le déflecteur 60 de la figure 12 peut être différent de celui qui vient d'être décrit. Par exemple, dans un mode de réalisation non représenté, le déflecteur 60 comprend un unique canal de redirection.

Dans un autre mode de réalisation non représenté, le ou les canaux de redirections sont des évidements réalisés dans la poutre interne 44.

Un tel déflecteur 60 à grille peut alternativement ou complémentairement être disposé sur la porte 47.

L'invention n'est aucunement limitée à des inverseurs du type décrit ci-dessus. Par exemple, l'invention s'applique de manière analogue à un inverseur tel celui décrit dans le document FR 2 764 000 A1.

L'invention s'applique aussi à des inverseurs comprenant plus de deux portes, par exemple à des inverseurs destinés à inverser uniquement le flux secondaire d'un ensemble propulsif.

Plus généralement, le principe de l'invention peut être mis en oeuvre dans toute application nécessitant d'améliorer le contrôle des jets d'air sortant de l'inverseur en inversion de poussée. Par exemple, l'invention présente aussi un intérêt dans des applications dans lesquelles l'inverseur équipe un ensemble propulsif monté sous une aile d'un aéronef.

## Revendications

1. Inverseur de poussée (40) pour ensemble propulsif (20) d'aéronef (1), cet inverseur (40) comprenant une structure fixe (41) et au moins une porte (47) mobile entre :
- une position fermée dans laquelle elle délimite avec la structure fixe (41) un conduit d'écoulement (D1), le conduit d'écoulement (D1) comprenant une sortie d'éjection délimitée au moins en partie par une extrémité arrière (43) de la structure fixe (41), la porte (47) en position fermée étant configurée pour pouvoir guider un fluide (E1) en écoulement dans le conduit (D1) vers sa sortie d'éjection (43) afin de générer une poussée, et
- une position ouverte dans laquelle la porte (47) dégage une ouverture d'inversion de manière à pouvoir évacuer du conduit d'écoulement (D1) une partie (E2) dudit fluide, via cette ouverture d'inversion, et rediriger une première partie (E4) du fluide ainsi évacué vers une extrémité avant (42) de la structure fixe (41) afin de générer une contre-poussée, l'ouverture de la porte (47) formant au moins une ouverture latérale s'étendant entre la structure fixe (41) et une extrémité latérale (54) de la porte (47),
cet inverseur (40) étant **caractérisé en ce que**, uniquement d'un côté d'un premier plan longitudinal médian (P1) de l'inverseur (40), l'une parmi la porte (47) et la structure fixe (41), ou chacune parmi la porte (47) et la structure fixe (41), comprend au moins un déflecteur (60) configuré pour pouvoir rediriger vers l'avant de la structure fixe (41) une deuxième partie (E7) du fluide, cette deuxième partie (E7) du fluide sortant du conduit d'écoulement (D1) selon une trajectoire orientée vers ladite ouverture latérale.

2. Inverseur (40) selon la revendication 1, dans lequel le déflecteur (60) comprend un ou plusieurs canaux de redirection (82) de ladite deuxième partie de fluide (E7).

3. Inverseur (40) selon la revendication 2, dans lequel la ou les structures, parmi la porte (47) et la structure fixe (41), comprenant ledit déflecteur (60) comprend un ou plusieurs évidements formant le ou lesdits canaux (82).

4. Inverseur (40) selon la revendication 2, dans lequel le déflecteur (60) est une pièce rapportée.

5. Inverseur (40) selon l'une quelconque des revendications 1 à 4, dans lequel le déflecteur (60) s'étend radialement entre une surface interne (70) et une surface externe (71) de la porte (47), au moins lorsque la porte (47) est fermée.

6. Inverseur (40) selon l'une quelconque des revendications 1 à 5 incluant les caractéristiques de la revendication 2, le déflecteur (60) étant configuré de sorte qu'une entrée (85) du ou desdits canaux (82) soit obturée par la porte (47) et/ou par la structure fixe (41) lorsque la porte (47) est fermée.

7. Inverseur (40) selon l'une quelconque des revendications 1 à 6, dans lequel le déflecteur (60) est configuré pour rediriger ladite deuxième partie (E7) du fluide de sorte que, en sortie (86) du déflecteur (60), au moins une fraction du fluide ainsi redirigé soit orientée dans une direction (E8) formant avec un axe central longitudinal (A7) de l'inverseur (40), dans un plan médian horizontal passant par cet axe central longitudinal (A7), un angle compris entre 15° et 75°, de préférence égal à 45°, lorsque la porte (47) est en position ouverte.

8. Nacelle (22) pour ensemble propulsif (20) d'aéronef (1), cette nacelle (22) comprenant un inverseur (40) selon l'une quelconque des revendications 1 à 7.

9. Aéronef (1) comprenant un fuselage (2) et un ensemble propulsif (20), l'ensemble propulsif (20) comprenant une nacelle (22) selon la revendication 8 et étant monté sur le fuselage (2), le déflecteur (60) et le fuselage (2) étant situés du même côté dudit premier plan longitudinal médian (P1) de l'inverseur (40).

10. Aéronef (1) selon la revendication 9, cet aéronef (1) comprenant un empennage (5), cet empennage (5) et ladite porte (47) de l'inverseur (40) étant situés d'un même côté d'un deuxième plan longitudinal médian (P2) de l'inverseur (40), ce deuxième plan longitudinal médian (P2) étant perpendiculaire audit premier plan longitudinal médian (P1).

## Patentansprüche

1. Schubumkehr (40) für eine Antriebseinheit (20) eines Flugzeugs (1), wobei diese Umkehr (40) eine feste Struktur (41) und mindestens eine Tür (47) umfasst, beweglich zwischen:
- einer geschlossenen Position, in der sie mit der festen Struktur (41) einen Strömungskanal (D1) begrenzt, wobei der Strömungskanal (D1) einen Ausstoßauslass umfasst, der mindestens teilweise durch ein hinteres Ende (43) der festen Struktur (41) begrenzt ist, wobei die Tür (47) in geschlossener Position konfiguriert ist, um ein in dem Kanal (D1) strömendes Fluid (E1) zu seinem Ausstoßauslass (43) zu leiten, um einen Schub zu erzeugen, und
- einer offenen Position, in der die Tür (47) eine Umkehröffnung freigibt, um aus dem Strömungskanal (D1) einen Teil (E2) des Fluids über diese Umkehröffnung ausbringen zu können, und einen ersten Teil (E4) des so ausgebrachten Fluids zu einem vorderen Ende (42) der festen Struktur (41) umzuleiten, um einen Gegenschub zu erzeugen, wobei die Öffnung der Tür (47) mindestens eine seitliche Öffnung bildet, die sich zwischen der festen Struktur (41) und einem seitlichen Ende (54) der Tür (47) erstreckt,
wobei diese Umkehr (40) **dadurch gekennzeichnet ist, dass** nur auf einer Seite einer ersten Längsmittelebene (P1) der Umkehr (40) eine von der Tür (47) und derfesten Struktur (41), oder jede von der Tür (47) und der festen Struktur (41) mindestens einen Abweiser (60) umfasst, der konfiguriert ist, um einen zweiten Teil (E7) des Fluids nach vorne der festen Struktur (41) umzuleiten, wobei dieser zweite Teil (E7) des Fluids entlang einer Bahn aus dem Strömungskanal (D1) austritt, die zur seitlichen Öffnung hin ausgerichtet ist.

2. Umkehr (40) nach Anspruch 1, wobei der Abweiser (60) einen oder mehrere Umlenkkanäle (82) für den zweiten Teil des Fluids (E7) umfasst.

3. Umkehr (40) nach Anspruch 2, wobei die Struktur oder Strukturen, aus der Tür (47) und der festen Struktur (41), die den Abweiser (60) umfassen, eine oder mehrere Ausnehmungen umfasst, die den oder die Kanäle (82) bilden.

4. Umkehr (40) nach Anspruch 2, wobei der Abweiser (60) ein beigebrachtes Teil ist.

5. Umkehr (40) nach einem der Ansprüche 1 bis 4, wobei sich der Abweiser (60), zumindest wenn die Tür (47) geschlossen ist, radial zwischen einer Innenoberfläche (70) und einer Außenoberfläche (71) der Tür (47) erstreckt.

6. Umkehr (40) nach einem der Ansprüche 1 bis 5, inklusive der Eigenschaften nach Anspruch 2, wobei der Abweiser (60) derart konfiguriert ist, dass ein Eingang (85) des oder der Kanäle (82) von der Tür (47) und/oder von der festen Struktur (41) verschlossen wird, wenn die Tür (47) geschlossen ist.

7. Umkehr (40) nach einem der Ansprüche 1 bis 6, wobei der Abweiser (60) konfiguriert ist, um den zweiten Teil (E7) des Fluids derart umzuleiten, dass am Ausgang (86) des Abweisers (60) mindestens eine Fraktion des so umgeleiteten Fluids in eine Richtung (E8) ausgerichtet wird, die mit einer Längsmittelachse (A7) der Umkehr (40) in einer horizontalen Mittelebene, die durch diese Längsmittelachse (A7) verläuft, einen Winkel bildet, der zwischen 15° und 75° liegt, vorzugsweise gleich 45° beträgt, wenn die Tür (47) in offener Position ist.

8. Gondel (22) für eine Antriebseinheit (20) eines Flugzeugs (1), wobei diese Gondel (22) eine Umkehr 40) nach einem der Ansprüche 1 bis 7 umfasst.

9. Flugzeug (1), das einen Rumpf (2) und eine Antriebseinheit (20) umfasst, wobei die Antriebseinheit (20) eine Gondel (22) nach Anspruch 8 umfasst, und an dem Rumpf (2) montiert ist, wobei sich der Abweiser (60) und der Rumpf (2) auf derselben Seite der ersten Längsmittelebene (P1) der Umkehr (40) befinden.

10. Flugzeug (1) nach Anspruch 9, wobei dieses Flugzeug (1) ein Leitwerk (5) umfasst, wobei sich dieses Leitwerk (5) und die Tür (47) der Umkehr (40) auf einer selben Seite einer zweiten Längsmittelebene (P2) der Umkehr (40) befinden, wobei diese zweite Längsmittelebene (P2) senkrecht zur ersten Längsmittelebene (P1) ist.

## Claims

1. A thrust reverser (40) for an aircraft (1) propulsion assembly (20), this reverser (40) comprising a fixed structure (41) and at least one door (47) movable between:
- a closed position wherein it delimits with the fixed structure (41) a flow conduit (D1), the flow conduit (D1) comprising an ejection outlet delimited at least partly by a rear end (43) of the fixed structure (41), the door (47) in the closed position being configured to be able to guide a fluid (E1) flowing in the conduit (D1) to its ejection outlet (43) in order to generate a thrust, and
- an open position wherein the door (47) releases a reversal opening so as to be able to evacuate from the flow conduit (D1) a portion (E2) of said fluid, via this reversal opening, and redirect a first portion (E4) of the fluid thus evacuated to a front end (42) of the fixed structure (41) in order to generate counter-thrust, the opening of the door (47) forming at least one lateral opening extending between the fixed structure (41) and a lateral end (54) of the door (47),
this reverser (40) being **characterised in that**, only on one side of a first median longitudinal plane (P1) of the reverser (40), one of the door (47) and the fixed structure (41), or each of the door (47) and the fixed structure (41), comprises at least one deflector (60) configured to be able to redirect a second portion (E7) of the fluid forward of the fixed structure (41), this second portion (E7) of the fluid exiting the flow conduit (D1) along a trajectory oriented towards said lateral opening.

2. The reverser (40) according to claim 1, wherein the deflector (60) comprises one or more channels (82) for redirecting said second portion of fluid (E7).

3. The reverser (40) according to claim 2, wherein the structure(s), among the door (47) and the fixed structure (41), comprising said deflector (60) comprises one or more recesses forming said channel(s) (82).

4. The reverser (40) according to claim 2, wherein the deflector (60) is an insert.

5. The reverser (40) according to any one of claims 1 to 4, wherein the deflector (60) extends radially between an internal surface (70) and an external surface (71) of the door (47), at least when the door (47) is closed.

6. The reverser (40) according to any one of claims 1 to 5 including the features of claim 2, the deflector (60) being configured so that an inlet (85) of said channel(s) (82) is closed off by the door (47) and/or by the fixed structure (41) when the door (47) is closed.

7. The reverser (40) according to any one of claims 1 to 6, wherein the deflector (60) is configured to redirect said second portion (E7) of the fluid so that, at the outlet (86) of the deflector (60), at least a fraction of the fluid thus redirected is oriented in a direction (E8) forming with a central longitudinal axis (A7) of the reverser (40), in a median horizontal plane passing through this central longitudinal axis (A7), an angle comprised between 15° and 75°, preferably equal to 45°, when the door (47) is in the open position.

8. A nacelle (22) for an aircraft (1) propulsion assembly (20), this nacelle (22) comprising a reverser (40) according to any one of claims 1 to 7.

9. An aircraft (1) comprising a fuselage (2) and a propulsion assembly (20), the propulsion assembly (20) comprising a nacelle (22) according to claim 8 and being mounted on the fuselage (2), the deflector (60) and the fuselage (2) being located on the same side of said first median longitudinal plane (P1) of the reverser (40).

10. The aircraft (1) according to claim 9, this aircraft (1) comprising a tail (5), this tail (5) and said door (47) of the reverser (40) being located on the same side of a second median longitudinal plane (P2) of the reverser (40), this second median longitudinal plane (P2) being perpendicular to said first median longitudinal plane (P1).
